Europäisches Patentamt

European Patent Office

Office européen des brevets

(19)

(11) Veröffentlichungsnummer : **0 366 932 B1**

(12) # EUROPÄISCHE PATENTSCHRIFT

(45) Veröffentlichungstag der Patentschrift :
**16.12.92 Patentblatt 92/51**

(51) Int. Cl.$^5$ : **B65G 53/52**

(21) Anmeldenummer : **89117944.2**

(22) Anmeldetag : **28.09.89**

(54) **Verfahren und Vorrichtung zum pneumatischen Langsamfördern körniger Feststoffe oder dergleichen durch Förderleitungen.**

(30) Priorität : **04.10.88 EP 88116404**

(43) Veröffentlichungstag der Anmeldung :
**09.05.90 Patentblatt 90/19**

(45) Bekanntmachung des Hinweises auf die Patenterteilung :
**16.12.92 Patentblatt 92/51**

(84) Benannte Vertragsstaaten :
**AT BE CH DE ES FR GB GR IT LI LU NL SE**

(56) Entgegenhaltungen :
**DE-A- 2 809 005**
**DE-A- 3 212 782**
**DE-A- 3 711 122**
**DE-B- 1 012 562**
**FR-A- 2 101 214**
**PATENT ABSTRACTS OF JAPAN, vol. 9, nr. 51 (M-361)(1774), 6. März 1985 & JP-A-59 186 833 (MITSUI ZOSEN) 23. Okt. 1984**

(73) Patentinhaber : **GERICKE AG, Maschinenfabrik Althardtstrasse 120 CH-8105 Regensdorf (CH)**

(72) Erfinder : **Molerus, Otto Prof. Dr.-Ing. Lärchenstrasse 7 W-8551 Hemhofen (DE)**
Erfinder : **Wirth, Karl-Ernst, Dr.-Ing. Kainsbacherstrasse 20 W-8561 Happurg (DE)**
Erfinder : **Siebenhaar, Wolfgang, Dr.-Ing. Wehrenreuthweg 46 W-8500 Nürnberg 90 (DE)**
Erfinder : **Gericke, Willi Laubisserstrasse 77 CH-8105 Watt (CH)**

(74) Vertreter : **Zeitler, Giselher, Dipl.-Ing. Patentanwalt Herrnstrasse 15 Postfach 26 02 51 W-8000 München 26 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum pneumatischen Fördern von Fördergut in Form körniger Feststoffe oder dgl. durch Förderleitungen gemäß dem Oberbegriff des Anspruchs 1.

Bei einem derartigen Verfahren wird grundsätzlich das Fördergut von einer in Form eines Senders, einer Schleuse oder dgl. ausgebildeten Fördergutaufgabeeinrichtung unter Druck sowie unter Zugabe von Fördergas, insbesondere Förderluft, in die Förderleitung eingegeben.

Beim heutigen Stand der pneumatischen Schüttgutförderung verstärkt sich der Trend zur Förderung mit sehr geringen Geschwindigkeiten des Fördergutes und hoher Gutbeladung des Fördergases. Eine derartige Schüttgutförderung bringt den Vorteil, daß das Fördergut und die Fördereinrichtung vor Abrieb sowie Zerstörung geschützt werden und daß die Verwendung kleinerer Fördergasmengen möglich ist. Dies erleichtert die Entstaubung und begünstigt die Einsparung von Energie.

Der im o.g. Sinn erwünschten Weiterentwicklung von Langsamförderverfahren mit hoher Gutbeladung des Fördergases sind jedoch durch den starken Anstieg des Druckwiderstandes Grenzen gesetzt. Dieser Anstieg des Druckwiderstandes wird durch die Reibung der Fördergas/Fördergutsäule an den Rohrwänden verursacht. Es ist deshalb schon mittels verschiedener Verfahren versucht worden, durch Zufuhr von Zusatzluft oder Bypass-Luft die durch den erwähnten hohen Druckwiderstand erzeugten Verstopfungen in der Rohrleitung zu beseitigen. Derartige Verfahren sind jedoch deshalb unbefriedigend, weil sie mit einem zusätzlichen Konstruktions- und Arbeitsaufwand verbunden sind.

Bei einem bekannten Verfahren der gattungsgemäßen Art (DE-A-32 12 782) wird ein Förderrohr vollständig mit körnigem Fördergut ausgefüllt und in Schwingungen versetzt sowie gleichzeitig unter Druck gesetzt. Die Schwingungen werden in axialer Richtung oder in Umfangsrichtung zum Rohr aufgebracht und führen zur Verminderung der Reibung zwischen dem Fördergut sowie der Rohrwand, so daß sich eine Pfropfen-oder fließbettförderung ergibt. Dies bewirkt eine sehr langsame Förderung der kompakten Fördergutsäule, was grundsätzlich erwünscht ist. Nachteilig bei diesem bekannten Verfahren ist jedoch, daß es in der Förderleistung sehr beschränkt ist, da nur Fördergeschwindigkeiten bis etwa 20 cm/s erreichbar sind. Es ist demnach für größere Förderleistungen nur eine zu geringe Fördergeschwindigkeit erzielbar. Nachteilig ist außerdem auch der erforderliche konstruktive Aufwand, wenn das Förderrohr in eine andere Richtung umzulenken ist.

Der Erfindung liegt daher die Aufgabe zugrunde, das pneumatische Förderverfahren der gattungsgemäßen Art derart auszugestalten, daß bei weiter vermindertem Reibungswiderstand die Gutbeladung des Fördergases ganz erheblich gesteigert wird, ohne daß höhere Förderdrücke aufgewendet werden müssen. Die zur Durchführung dieses Verfahrens vorgesehene Vorrichtung soll einfach, dabei jedoch funktionszuverlässig ausgestaltet sein.

Das zur Lösung dieser Aufgabe geschaffene Förderverfahren gemäß der Erfindung ist durch die Merkmale des Anspruchs 1 gekennzeichnet. Vorteilhafte Ausgestaltungen hiervon sind in den Ansprüchen 2 bis 5 beschrieben.

Die zur Durchführung dieses Verfahrens geschaffene Vorrichtung gemäß der Erfindung weist die im Anspruch 6 beschriebenen Merkmale auf. Vorteilhafte Ausgestaltungen hiervon sind in den weiteren Ansprüchen beschrieben.

Bei dem erfindungsgemäßen Verfahren wird das Fördergut so in die Förderleitung eingegeben, daß der Leitungsquerschnitt lediglich teilweise ausgefüllt ist. Die auf die einzelnen Leitungsabschnitte von bis zu mehreren Metern Länge aufgebrachten Schwingungen, welche die Wandreibung zwischen Fördergut und Förderleitung reduzieren, werden so eingestellt, daß der Förderzustand einer Strähnen-/Ballen-Förderung entsteht und sich die am Leitungsboden aufbauende Fördergutschicht ebenfalls fortbewegt. Unter Strähnen/Ballen-Förderung wird hierbei ein Förderzustand in der Leitung verstanden, bei dem einerseits am Rohrboden eine Fördergutschicht aufgebaut ist, die sich unter dem Einfluß der Schwingungen fortbewegt, während andererseits über dieser sich fortbewegenden bodenseitigen Fördergutschicht Fördergut-Strähnen und/oder -Dünen und/oder -Ballen gebildet sind, die sich ebenfalls fortbewegen.

Durch das erfindungsgemäße Verfahren wird demnach mit Vorteil die bisher noch vorhandene Lücke zwischen der bekannten sehr -langsamen Förderung im vollständig mit Schüttgut gefüllten vibrierten Rohr und der sog.reinen Strähnenförderung ausgefüllt. Bei letzterer herrscht ein Förderzustand, bei dem über einer ruhenden unteren Gutschicht das Fördergut in Strähnen mit einer Beladungsgröße gefördert wird, die gerade noch einen zu hohen Druckwiderstand und damit ein Verstopfen des Leitungsquerschnittes verhindert.

Bei einer praktischen Erprobung des erfindungsgemäßen Verfahrens konnte bestätigt werden, daß durch Unterteilung ei ner herkömmlichen pneumatischen Hochdruckschubförderanlage in verschiedene Leitungsabschnitte und durch Aufbringen von Schwingungen auf diese Leitungsabschnitte dann bei wesentlich höheren Beladungen und geringeren Geschwindigkeiten gefahren werden kann. Dabei ist der Leitungsquerschnitt nicht vollständig, sondern lediglich teilweise ausgefüllt, wobei die Befüllung jedoch stärker ist als bei der normalen pneumatischen Schubförderung.

Durch die Anwendung von Schwingungen, speziell an den kritischen Leitungsstellen, wie beisp. in bzw. an Leitungsbögen oder bei der Einspeisung vom Sender in die Förderleitung, wird auch bei hoher Beladung eine Verstopfung vermieden, indem die Wandreibung durch die aufgebrachten Schwingungen vermindert wird.

Somit wird durch die Erfindung eine Förderung ermöglicht, bei der die Förderleitung nicht vollständig gefüllt und damit die Förderfähigkeit begrenzt ist, sondern bei welcher der Förderzustand einer Strähnen/Ballen-Förderung erzeugt wird, wobei jedoch die am Rohrboden sich aufbauende Fördergutschicht unter dem Einfluß der Schwingungen sich ebenfalls fortbewegt. Dadurch wird der Reibungswiderstand weiter entscheidend vermindert. Durch diese Art der Förderung kann die Beladung des Fördergases mit Fördergut ganz erheblich gesteigert werden, ohne daß höhere Förderdrücke aufgewendet werden müssen.

In praktischen Versuchen unter Anwendung der Erfindung konnte z. B. für Sand als Fördergut bei gleichem Druck die Beladung mehr als verdoppelt werden. Hierbei wurden außerdem Fördergeschwindigkeiten von etwa 50 cm/s erzielt, was bisher kaum für möglich gehalten wurde. Dies erlaubt gegenüber den heute angewendeten wesentlich höheren Fördergeschwindigkeiten eine starke Verminderung des Verschleißes und der Energiekosten. Trotz der geringen Fördergeschwindigkeit erlaubt die mit der Erfindung erzielbare hohe Beladung die Erreichung beachtlicher Förderleistungen pro Leitungsquerschnittsfläche.

Bei der zur Durchführung des erfindungsgemäßen Verfahrens vorgesehenen Vorrichtung, bei der die einzelnen Leitungsabschnitte zur Vibrationserzeugung jeweils einen Schwingungserreger aufweisen und durch Schwingungskompensatoren voneinander getrennt sind, bestehen wenigstens einzelne Leitungsabschnitte der Förderleitung aus einem flexiblen Schlauch. Dieser kann entweder lose in ein starres Rohr eingelegt sein, das seinerseits mittels der Schwingungserreger in Vibrationen versetzt wird, oder es kann der flexible Schlauch mittels Schlauchbindern, beispielsweise in Form von Schlauchschellen oder dgl., schwingungsfähig auf einer Trageinrichtung befestigt sein. Im letztgenannten Fall kann dann die Anordnung derart getroffen sein, daß der Schwingungserreger entweder mit der schwingungsfähig ausgebildeten Trageinrichtung, beispielsweise einem entsprechenden U-Profil, verbunden ist oder aber daß der Schwingungserreger direkt auf den flexiblen Schlauch, beispielsweise über eine Schlauchschelle oder dgl., aufgesetzt ist. Eine derartige Ausbildung kann sowohl bei einem vertikalen als auch bei einem horizontalen Schlauchabschnitt vorgesehen werden.

Eine derartige Ausbildung, bei der die Förderleitung teilweise oder vollständig aus flexiblen Schlauchabschnitten gebildet ist, die in der beschriebenen Weise entweder direkt oder indirekt in Schwingungen versetzt werden, erweist sich insbesondere dann als außerordentlich vorteilhaft, wenn spezielle Fördergüter, beispielsweise Perlruß, Titandioxid oder dgl., transportiert werden sollen. Hierbei hat sich gezeigt, daß bei der Förderung derartiger außerordentlich feinkörniger Güter der Einsatz einer wenigstens teilweise aus flexiblen Schlauchabschnitten gebildeten Förderleitung deswegen optimal ist, weil eine ansonsten nicht auszuschließende Schichtbildung an der Innenwand vollständig verhindert und die Förderung verbessert wird. Dies beruht darauf, daß der nur lose befestigte flexible Schlauch sich in dauernder Bewegung befindet, wodurch sich ein Reinigungseffekt und auch eine gute Rahmenbedingung für die Förderung ergibt. Wie schon dargelegt, ist hierbei der flexible Schlauch entweder in ein starres Rohr eingelegt, das in Schwingungen versetzt wird, oder er ist mittels Schlauchbindern auf einer schwingenden Trageinrichtung, beispielsweise einem U-Profil, befestigt. Stattdessen können auch die Schwingungen direkt auf den flexiblen Schlauch aufgebracht werden, indem der Schwingungserreger, beispielsweise ein Unwuchtmotor, direkt über eine Schlauchschelle oder dgl. auf den flexiblen Schlauch aufgesetzt ist.

Da in der Förderleitung die größten Reibungswiderstände naturgemäß in den Leitungsbögen auftreten, ist es bei Verwendung von Leitungsbögen mit verhältnismäßig kleinem Biegeradius zweckmäßig, entsprechende Schwingungen aufzubringen, die vorzugsweise Frequenzen im Bereich von etwa 50 Hz und/oder Beschleunigungen von wenigstens 1,2 g, vorzugsweise etwa 1,5 g, aufweisen. Hierdurch kann der Druckwiderstand erheblich herabgesetzt werden.

Die Förderleitung, die beispielsweise aus horizontalen und vertikalen Teilstücken besteht, ist zweckmäßigerweise in Vibrationsabschnitte unterteilt. Diese bestehen ihrerseits jeweils aus einem Leitungsbogen mit zwei fest verbundenen Schenkelstücken sowie aus geraden Leitungsabschnitten. Die einzelnen Vibrationsabschnitte sind hierbei durch Schwingungskompensatoren voneinander getrennt. Bei solchen Abschnitten, die einen Bogen einschließen, erfolgt die Vibration im wesentlichen in Richtung des mittleren Radius oder durch eine Kreisbewegung mittels Unwuchtmotor. Demgegenüber wird bei geraden Leitungsstücken die Vibration vorteilhafterweise in axialer Richtung oder auch kreisförmig bzw. mit schräg nach oben in Förderrichtung gerichteter Schwingung durchgeführt.

Durch die Erfindung ist es außerdem mit Vorteil möglich, in einfacher Weise die Fördermenge zu dosieren. Dies erfolgt durch entsprechendes Ändern des Fördergasdruckes und/oder der Schwingungen am Anfang der Förderleitung, wobei hierzu zweckmäßigerweise der erste Rohrabschnitt mit einem einstellbaren oder regelbaren Vibrationserreger als Dosierorgan ausgestattet ist.

Bei der Erfindung kann somit durch Änderung der Vibrationsstärke der Schwingungserreger, beispielsweise durch Drehzahländerung der Unwuchtmotoren mittels Freguenzumwandler, der Förderstrom in seiner Stärke variiert und bei Wunsch sogar zum Stillstand gebracht werden. Dies ist von besonderer Bedeutung, da hierdurch die erfindungsgemäße Vorrichtung in Verbindung mit einer Wägeeinrichtung zu Dosierungszwecken eingesetzt werden kann, wobei dann die Variation des Förderstromes sowie der vollständige Stop der Förderung zu Dosierungszwecken erfolgen können, und zwar sowohl im Chargenbetrieb als auch im kontinuierlichen Betrieb, wobei in jedem Fall eine reproduzierbare Förderstromeinstellung möglich ist. Es kann somit der Förderstrom lediglich über die Vibrationsstärke exakt dosiert werden, wobei zweckmäßigerweise der Druck sowie die Beaufschlagungsmenge des Fördergases bzw. der Förderluft unverändert bleiben, jedoch bei Wunsch auch verändert werden können.

Durch entsprechende praktische Versuche mit der Erfindung konnte bestätigt werden, daß sich bei der ansonsten grundsätzlich schwierigen vertikal nach oben gerichteten Förderung feinkörniger Teilchen mit einer Partikelgröße unter 1 mm unter dem Einfluß der erfindungsgemäß vorgesehenen Schwingungen eine gleichmäßige Feststoffverteilung in der Förderleitung und damit ein schonender Transport der Schüttgutsäule einstellt.

Um zu verhindern, daß bei der Förderung grobkörniger Partikel mit Partikelgrößen über 1 mm in der schwingenden Förderleitung möglicherweise Entmischungen in Form von Gaskolben bei der vertikal nach oben erfolgenden Förderung auftreten, können die vertikalen Teile der Förderleitung schraubenartig um eine vertikale Achse sich windend angeordnet sein. In diesem Fall wird dann zweckmäßigerweise die aufwärtsspiralig angeordnete Förderleitung um ihre vertikale Mittelachse in drehende Schwingungen versetzt. Dadurch wird auch bei der vertikal nach oben führenden Förderung ein ähnlicher Förderzustand wie bei der Horizontalförderung erzielt. Somit kann eine derartige Anordnung der Förderleitung bei der Förderung extrem bruchempfindlicher Güter von praktischer und damit wesentlicher Bedeutung sein.

Die Erfindung wird im folgenden anhand der Zeichnung näher erläutert. Diese zeigt in:

Fig. 1 a) - f) verschiedene Förderzustände bei der pneumatischen Förderung, und zwar jeweils schematisch im Längsschnitt (linkes Bild) sowie im Querschnitt (rechtes Bild), nämlich

1a) den Förderzustand des reinen Flugs,

1b) den Strähnen-Förderzustand,

1c) den Strähnen/Dünen-Förderzustand,

1d) den Dünen/Ballen-Förderzustand,

1e) den Förderzustand des reinen Schubs (Fließbettzustand) und

1f) den Zustand der induzierten Pfropfenförderung;

Fig. 2 schematisch die Fördervorrichtung mit unterschiedlich ausgestalteter Förderleitung;

Fig. 3 im Detail einen Abschnitt der Förderleitung, der mit einer Schikane in Form eines flußhemmenden Mundstückes versehen ist;

Fig. 4 schematisch einen aus einem flexiblen Schlauch gebildeten Abschnitt der Förderleitung in Seitenansicht und

Fig. 5 im querschnitt gemäß Linie V-V nach Fig. 4.

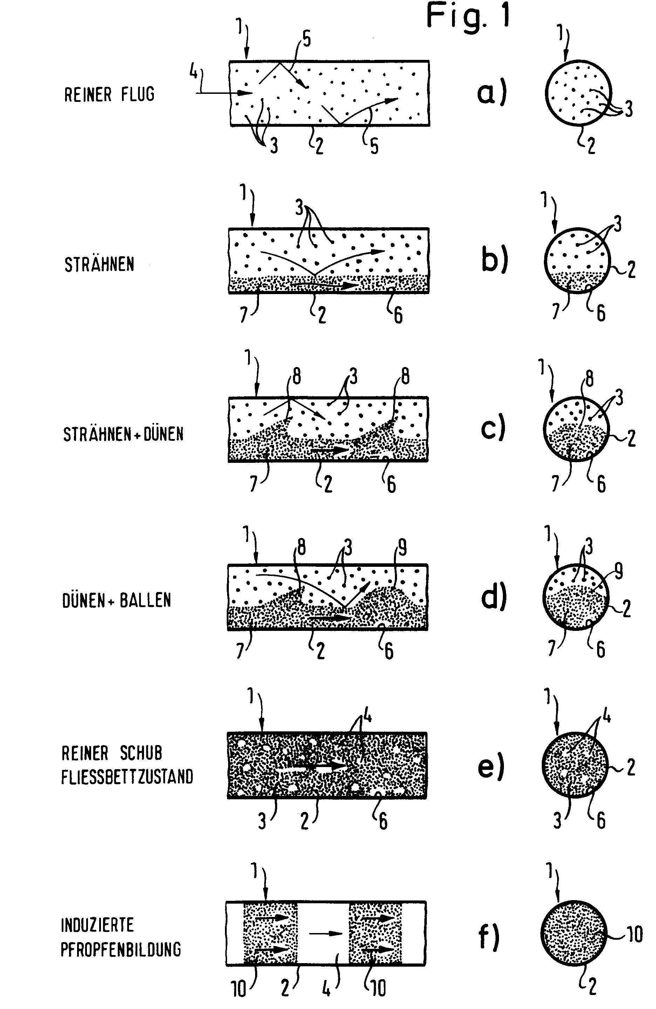

Wie aus den verschiedenen Darstellungen der Fig. 1 ersichtlich, können in einer Förderleitung 1 bzw. in den einzelnen Leitungsabschnitten 2 einer pneumatischen Fördervorrichtung verschiedene Förderzustände herrschen, und zwar in Abhängigkeit von den aufgebrachten Bedingungen. So zeigt Fig. 1a) den im Leitungsabschnitt 2 herrschenden Förderzustand des reinen Fluges, bei dem die einzelnen Fördergutteilchen 3 frei im Fördergasstrom 4 schwebend von diesem vorwärtstransportiert werden. Die sich hierbei ergebende Wandreibung, die durch den Aufprall der Gutteilchen 3 an der Innenwand des Leitungsabschnittes 2 verursacht ist, ist durch die Pfeile 5 angedeutet.

Demgegenüber ist in Fig. Ib) der Strähnen-Förderzustand dargestellt. Dieser entspricht im wesentlichen dem zuvor beschriebenen Förderzustand des reinen Fluges gemäß Fig. 1a), jedoch mit dem Unterschied, daß sich am Boden 6 des Leitungsabschnittes 2 eine Fördergutschicht 7 abgelagert hat. Diese ist in Form von Strähnen ausgebildet und stellt grundsätzlich eine ruhende Schicht dar. Bei der Anwendung des beschriebenen Verfahrens, bei dem die Förderleitung 1 lediglich teilweise ausgefüllt ist und eine spezielle, die Wandreibung reduzierende Schwingung aufgebracht wird, bewegt sich jedoch diese am Leitungsboden 6 befindliche Fördergutschicht 7 ebenfalls vorwärts, wie durch den Pfeil in Fig. 1b) angedeutet.

Bei dem gegenüber Fig. 1b) abgewandelten Förderzustand gemäß Fig. 1c) herrscht ein Strähnen/Dünen-Förderzustand vor. Hierbei weist die auf dem Leitungsboden 6 befindliche Fördergutschicht 7 an ihrer Oberfläche einen solchen Verlauf auf, daß in Richtung der Leitungsachse aufeinanderfolgende Formationen in Form von Dünen 8 gebildet sind.

Diese Formationen können auch, wie aus Fig. 1d) ersichtlich, die Form von Ballen 9 aufweisen bzw. aus Kombinationen von Dünen 8 und Ballen 9 gebildet sein.

Bei dem Förderzustand gemäß Fig. 1e) ist die Förderleitung 1 vollständig mit einem fließbettartigen Gemisch aus Fördergas 4 und Fördergutteilchen 3 gefüllt, wobei die Fluidisierung so groß ist, daß sich der erwünschte Transport ergibt.

In Abwandlung hierzu zeigt der Förderzustand gemäß Fig. 1f) den Zustand der induzierten Pfropfenförderung, bei dem im jeweiligen Leitungsabschnitt 2 der Förderleitung 1 aus den Fördergutteilchen 3 einzelne Pfropfen 10 gebildet sind, zwischen denen sich entsprechende Blasen des Fördergases 4 befinden.

Wie bereits dargelegt, wird bei dem beschriebenen Verfahren aufgrund der angewendeten Bedingungen ein Förderzustand erzielt, der eine Förderung ähnlich einer Strähnen/Ballen-Förderung bewirkt - entsprechend der Förderzuständen gemäß Fig. 1b) - 1d), wobei in jedem Fall gewährleistet ist, daß sich die am Leitungsboden 6 aufbauende Fördergutschicht 7 ebenfalls fortbewegt, und zwar zusammen mit den durch den Fördergasstrom 4 im reinen Flug bewegten Fördergutteilchen 3. Je nach den Eigenschaften des Förderguts, der gewünschten Förderleistung und der Länge des Förderwegs sind jedoch auch die anderen Forderzustände gemäß Fig. 1b) und 1f) möglich. Dabei werden ruhende Gutschichten vermieden, und es wird bei allen Förderzuständen der spezifische Druckwiderstand stark verringert oder es werden stattdessen größere Beladungen ermöglicht.

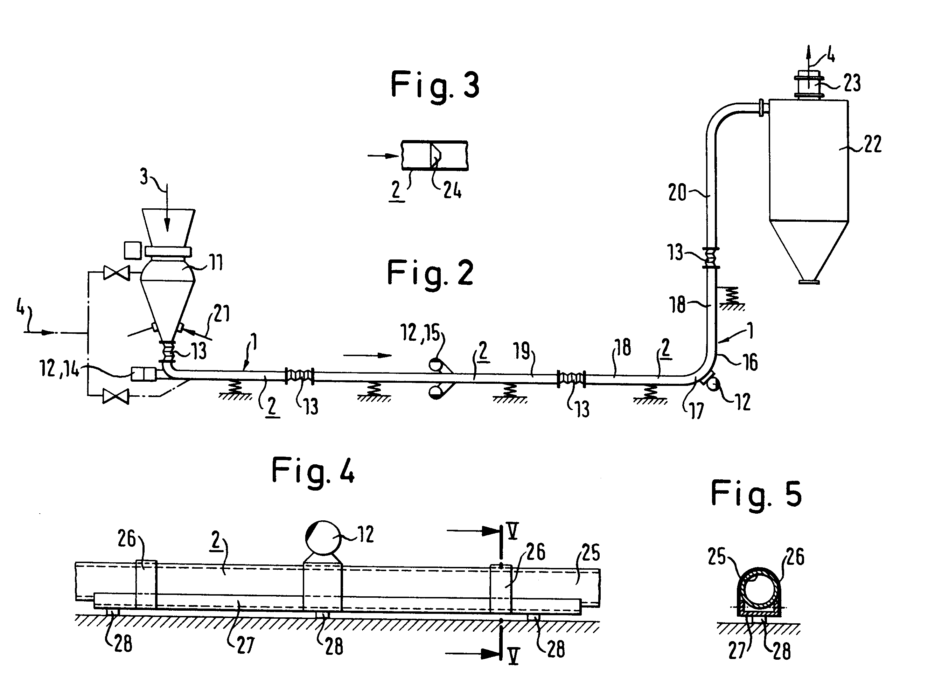

Fig. 2 zeigt schematisch den Aufbau einer Fördervorrichtung. Das Fördergut 3 gelangt in eine Aufgabeeinrichtung 11, die als Drucksender ausgestaltet ist, aber auch eine Schleuse od. dgl. sein kann. Die Förderleitung 1 ist in verschiedene schwingfähig gelagerte Leitungsabschnitte 2 unterteilt. Diese sind durch Schwingungskompensatoren 13 voneinander getrennt und mit Schwingungserregern 12 versehen. Als solche kommen regelbare Elektromagnet-Vibratoren 14, Unwuchtmotoren 12 mit Kreisschwingung oder Unwuchtmotoren 15 mit gerichteter Schwingung in Frage. Ein schwingender Leitungsabschnitt 2 besteht entweder aus einem geraden Leitungsstück 19 oder aus einer Kombination 16 in Form eines Leitungsbogens 17 mit zwei hiermit verbundenen geraden Schenkeln 18. Ein Teil der Förderleitung 1 kann auch aus einem nichtschwingenden Leitungsstück 20 bestehen.

Zur Erhöhung der Leitungsfüllung mit Fördergut 3 können flußhemmende Mundstücke 24 eingebaut sein (s. Fig. 3) oder es kann die Aufgabeeinrichtung 11 mit Fluidisiergas 21 beaufschlagt sein.

Der Fördergutstrom 3 ist ohne besondere Abscheidevorrichtungen direkt in einen Empfangsbehälter 22 geführt. Die sehr geringe Menge des Fördergases 4 entweicht nach oben durch einen kleinen Filter 23.

Insgesamt wird daher das Fördergut 3 über einen Drucksender 11 oder eine Schleuse mit hoher Beladung in eine in Abschnitte 2 unterteilte Förderleitung 1 aufgegeben. Die einzelnen Abschnitte 2 dieser Leitung 1 bestehen aus schwingfähig gelagerten Leitungsstücken, die mit Schwingungserregern 12, 14, 15 in Vibration versetzt werden. Einzelne Abschnitte können auch aus nicht schwingenden Leitungsstücken 20 bestehen.

Durch die Vibration der Leitungswandung wird die Reibung zwischen der Fördergutluftsäule und der Wand vermindert, wodurch bei einem bestimmten Förderdruck wesentlich höhere Beladungen möglich sind. Ebenso kann die Fördergeschwindigkeit ohne Verstopfungsgefahr stark reduziert werden.

Üblicherweise bestehen die einzelnen Abschnitte 2 der Förderleitung 1 aus einem starren Rohr, insbesondere einem Metallrohr, das in der beschriebenen Weise schwingungsfähig gelagert ist und durch die Schwingungserreger 12 bzw. 14 bzw. 15 in Vibrationen versetzt ist. Jedoch sind einzelne oder alle Leitungsabschnitte 2 der Förderleitung 1 in Form eines flexiblen Schlauchs 25 ausgebildet. Dieser ist, wie aus Fig. 4 und 5 ersichtlich, mittels Schlauchschellen 26 auf einer starren Trageinrichtung in Form eines U-Profils 27 befestigt, das seinerseits schwingungsfähig auf Schwingungsdämpfern 28 gelagert ist. Der flexible Schlauch 25 wird mittels des Schwingungserregers 12, beispielsweise in Form eines Unwuchtmotors, in die erwünschten Vibrationen versetzt, wobei der Schwingungserreger 12 entweder indirekt auf den flexiblen Schlauch 25 einwirkt, indem er an der Trageinrichtung 27 befestigt ist, oder mehr oder weniger direkt auf den flexiblen Schlauch 25 einwirkt, indem er direkt über eine der Schlauchschellen 26 auf den Schlauch 25 aufgesetzt ist.

**Patentansprüche**

1. Verfahren zum pneumatischen Fördern von Fördergut in Form körniger Feststoffe oder dgl. durch Förderleitungen, bei dem das Fördergut von einer in Form eines Senders, einer Schleuse oder dgl. unter Druck sowie unter Zugabe von Fördergas in die Förderleitung eingegeben und die in verschiedene Leitungsabschnitte unterteilte Förderleitung derart in Schwingungen versetzt wird, daß die Wandreibung zwischen Fördergut und Förderleitung reduziert wird,
**dadurch gekennzeichnet,**
- daß das Fördergut (3) in die Förderleitung (1) so eingegeben wird, daß der Leitungsquerschnitt lediglich teilweise ausgefüllt ist, und
- daß die auf die einzelnen Leitungsabschnitte (2) von bis zu mehreren Metern Länge aufgebrachten Schwingungen so eingestellt werden, daß der Förderzustand einer Strähnen-/Ballen-Förderung entsteht und sich die am Leitungsboden (6) aufbauende Fördergutschicht (7) ebenfalls fortbewegt.

2. Verfahren nach Anspruch 1,
**dadurch gekennzeichnet,**
daß die Schwingungen auf die einzelnen Leitungsabschnitte (2) mit Beschleunigungen von wenigstens 1,2 g aufgebracht werden.

3. Verfahren nach Anspruch 1 oder 2,
**dadurch gekennzeichnet,**
daß die Schwingungen auf die einzelnen Leitungsabschnitte (2) mit Amplituden im Bereich unter 1 mm aufgebracht werden.

4. Verfahren nach einem der Ansprüche 1 bis 3,
**dadurch gekennzeichnet,**
daß durch Ändern des Fördergasdruckes und-/oder der Schwingungen, insbesondere am Anfang der Förderleitung (1), ein Dosieren der Fördermenge erzielt wird.

5. Verfahren nach einem der Ansprüche 1 bis 4,
**dadurch gekennzeichnet,**
daß dem Fördergas (4) in der Förderleitung (1) eine Geschwindigkeit zwischen 0,1 und 3,0 m/s erteilt wird.

6. Vorrichtung zur Durchführung des Verfahrens nach einem der Ansprüche 1 bis 5, mit einer in mehrere Leitungsabschnitte unterteilten Förderleitung, an deren Anfang eine Gutaufgabeeinrichtung in Form eines Senders, einer Schleuse oder dgl. vorgesehen ist und bei der die einzelnen Leitungsabschnitte zur Vibrationserregung jeweils einen Schwingungserreger aufweisen sowie durch Schwingungskompensatoren voneinander getrennt sind,
**dadurch gekennzeichnet,**
daß wenigstens einzelne Leitungsabschnitte (2) der Förderleitung (1) aus einem flexiblen Schlauch (25) bestehen, der auf oder in einer schwingenden Halterung (27) befestigt ist.

7. Vorrichtung nach Anspruch 6,
**dadurch gekennzeichnet,**
daß der flexible Schlauch (25) lose in ein schwingendes starres Rohr eingelegt ist.

8. Vorrichtung nach Anspruch 6,
**dadurch gekennzeichnet,**
daß der flexible Schlauch (25) mittels Schlauchbindern (26), beispielsweise in Form von Schlauchschellen od. dgl., schwingungsfähig auf einer Trageinrichtung (27) befestigt ist.

9. Vorrichtung nach Anspruch 8,
**dadurch gekennzeichnet,**
daß der Schwingungserreger (12) mit der schwingungsfähig ausgebildeten Trageinrichtung (27) verbunden ist.

10. Vorrichtung nach Anspruch 8,
**dadurch gekennzeichnet,**
daß der Schwingungserreger (12) direkt auf den flexiblen Schlauch (25), beispielsweise über eine Schlauchschelle (26) od. dgl., aufgesetzt ist.

11. Vorrichtung nach einem der Ansprüche 6 bis 10,
**dadurch gekennzeichnet,**
daß wenigstens der erste Leitungsabschnitt (2) als Dosierorgan einen einstellbaren oder regelbaren Vibrationserreger (14) aufweist.

12. Vorrichtung nach einem der Ansprüche 6 bis 11,
**dadurch gekennzeichnet,**
daß die Schwingungserreger (12,14) als elektromagnetische Schwingungserreger mit axial zur Leitungsachse oder im Winkel von bis zu 45° gerichteter Schwingung ausgebildet sind.

13. Vorrichtung nach einem der Ansprüche 6 bis 11,
**dadurch gekennzeichnet,**
daß die Schwingungserreger Unwuchtmotoren (12) sind, die eine Kreisschwingung erzeugen.

14. Vorrichtung nach einem der Ansprüche 6 bis 13,
**dadurch gekennzeichnet,**
daß, insbesondere zur Förderung grobkörniger Güter mit Partikelgrößen über 1 mm, die vertikalen Leitungsabschnitte der Förderleitung (1) schraubenartig um eine vertikale Achse sich windend angeordnet und die aufwärts spiralig verlaufende Förderleitung um ihre vertikale Mittelachse in drehende Schwingungen versetzbar ist.

**Claims**

1. Process for pneumatic conveying of material to be conveyed in the shape of granular solids or similar materials through conveyor lines, into which the material to be conveyed is introduced into the conveyor line by means of a feeder, a lock or similar device under pressure and with the addition of conveying gas, and the conveyor line, which is subdivided into various line sections, is vibrated in such a way as to reduce the wall friction between material to be conveyed and conveyor line,
**characterised in that**
- material (3) to be conveyed is introduced into conveyor line (1) in such a way that the cross-section of the line is filled only in part, and
- in that the vibration applied to the various line sections (2), the length of which may amount up to several metres, is so adjusted that the conveying state of strand/wave-type conveyance is generated and layer (7) of material to be conveyed which accumulates on bottom (6) of the line also advances.

2. Process according to claim 1,
**characterised in that**
the vibrations are applied to the various line sections (2) subject to accelerations of not less than 1.2 g.

3. Process according to claim 1 or 2,
**characterised in that**
the vibrations are applied to the various line sections (2) with amplitudes of less than 1 mm.

4. Process according to one of claims 1 to 3,
**characterised in that**
metering of the material to be conveyed is achieved by varying the pressure of conveying gas and/or the vibrations, in particular at the start of conveyor line 1.

5. Process according to one of claims 1 to 4,
**characterised in that**
a velocity between 0.1 and 3.0 m/sec is imparted to conveying gas (4) in conveyor line (1).

6. System for carrying out the process according to one of claims 1 to 5, with a conveyor line subdivided into several line sections, at the start of which a material feeding device in the shape of a feeder, lock or similar device is provided and in which the various line sections are each equipped with a vibrator for the purpose of generating vibrations and separated from one another by means of bellow expansion joints,
**characterised in that**
at least certain line sections (2) of conveyor line (1) consists in a flexible hose (25) secured on or within a vibrating holder (27).

7. System according to claim 6,
**characterised in that**
flexible hose (25) is inserted loosely within a vibrating rigid tube.

8. System according to claim 6,
**characterised in that**
flexible hose (25) is secured to a support unit (27) by means of hose couplings (26), e.g. in the shape of hose clips or similar devices, so as to be capable of vibration.

9. System according to claim 8
**characterised in that**
vibrator (12) is connected with support unit (27) which is so designed as to be capable of vibration.

10. System according to claim 8,
**characterised in that**
vibrator (12) is mounted directly on flexible hose (25), e.g. via a hose clip (26) or similar device.

11. System according to one of claims 6 to 10,
**characterised in that**
at least the first line section (2) has an adjustable or controllable vibrator (14) by way of metering device.

12. System according to one of claims 6 to 11,
**characterised in that**
the vibration generators (12, 14) are designed as electro-magnetic vibrators vibrating axially in relation to the line axis or at an angle of up to 45° to the line axis.

13. System according to one of claims 6 to 11,
**characterised in that**
the vibrators are unbalance motors (12) generating a circular vibration.

14. System according to one of claims 6 to 13,
**characterised in that**
in particular for conveying coarse-grained materials with particle sizes of more than 1 mm, the vertical line sections of conveyor line (1) are arranged so as to wind helically about a vertical axis, whereby rotary vibrations can be applied about the vertical centre axis of the upward spiralling conveyor line.

**Revendications**

1. Procédé pour le transport pneumatique d'un produit en vrac sous forme de matières solides granulaires ou similaires dans des conduites de transport, procédé dans lequel le produit à transporter est introduit dans la conduite de transport par un dispositif sous forme d'un alimentateur, d'une écluse ou analogue, sous pression et sous addition d'un gaz de transport et dans lequel la conduite de transport, divisée en différents tronçons de conduite, est mise en vibration de façon à réduire le frottement de la paroi entre le produit à transporter et la conduite de transport,
procédé caractérisé
- par le fait que l'on introduit le produit à transporter (3) dans la conduite de transport (1) de façon à ne remplir que partiellement la section de la conduite et
- par le fait que l'on règle les vibrations, appliquées sur les différents tronçons de conduite (2) d'une longueur allant jusqu'à plusieurs mètres, de façon qu'apparaisse la situation de transport par écheveaux/par éminences et que la couche (7) de produit à transporter qui s'établit sur la partie inférieure (6) de la conduite avance également.

2. Procédé selon la revendication 1,
caractérisé
par le fait que l'on applique les vibrations sur les différents tronçons (2) de conduite avec des accélérations d'au moins 1,2g.

3.  Procédé selon la revendication 1 ou 2,
    caractérisé
        par le fait que l'on applique les vibrations
    sur les différents tronçons (2) de conduite avec
    des amplitudes inférieures à 1mm.

4.  Procédé selon l'une des revendications 1 à 3,
    caractérisé
        par le fait que l'on obtient un dosage du débit transporté en mofifiant la pression du gaz du
    transport et/ou les vibrations, en particulier au
    début de la conduite de transport (1).

5.  Procédé selon l'une des revendications 1 à 4,
    caractérisé
        par le fait que l'on donne au gaz de transport (4) dans la conduite de transport (1) une vitesse valant entre 0,1 et 3,0 m/s.

6.  Dispositif pour la mise en oeuvre du procédé selon l'une des revendications 1 à 5, avec une
    conduite de transport, divisée en plusieurs tronçons de conduite, au début de laquelle est prévu
    un dispositif d'alimentation en produit sous forme
    d'un alimentateur, d'une écluse ou analogue, et
    dans le cas de laquelle les différents tronçons de
    conduite présentent chacun un vibrateur pour
    créer les vibrations et sont séparés l'un de l'autre
    par des compensateurs de vibration,
        dispositif caractérisé
        par le fait qu'au moins certains tronçons
    (2) de la conduite de transport (1) sont constitués
    d'un tuyau flexible (25) qui est fixé sur ou dans un
    support vibrant (27).

7.  Dispositif selon la revendication 6,
    caractérisé
        par le fait que le tuyau flexible (25) est placé, sans serrage, dans un tube rigide vibrant.

8.  Dispositif selon la revendication 6,
    caractérisé
        par le fait que le tuyau flexible (25) est fixé
    sur un support (27) avec liberté de vibration, au
    moyen d'attaches pour tuyau (26), par exemple
    sous forme de colliers pour tuyau ou analogue.

9.  Dispositif selon la revendication 8,
    caractérisé
        par le fait que le vibrateur (12) est relié au
    support (27) conçu avec liberté de vibration.

10. Dispositif selon la revendication 8,
    caractérisé
        par le fait que le vibrateur (12) est directement placé sur le tuyau flexible (25), par exemple par l'intermédiaire d'un collier pour tuyau (26) ou
analogue.

11. Dispositif selon l'une des revendications 6 à 10,
    caractérisé
        par le fait qu'au moins le premier tronçon
    de conduite (2) présente, comme organe de dosage, un vibrateur (14) réglable ou régulable.

12. Dispositif selon l'une des revendications 6 à 11,
    caractérisé
        par le fait que les vibrateurs (12, 14) sont
    conçus sous forme de vibrateurs électromagnétiques à vibration orientée axialement par rapport
    à l'axe de la conduite ou sous un angle allant jusqu'à 45°.

13. Dispositif selon l'une des revendications 6 à 11,
    caractérisé
        par le fait que les vibrateurs sont des moteurs à balourd (12) qui produisent une vibration
    circulaire.

14. Dispositif selon l'une des revendications 6 à 13,
    caractérisé
        par le fait qu'en particulier pour le transport de produits de granulométrie grossière avec
    des dimensions de particules supérieures à
    1mm, les tronçons de conduite verticaux de la
    conduite de transport (1) sont disposés en hélice
    s'enroulant autour d'un axe vertical et qu'à la
    conduite de transport, qui va en spirale vers le
    haut, on peut appliquer des vibrations en rotation
    autour de l'axe vertical de cette conduite.

# Fig. 1

REINER FLUG — a)

STRÄHNEN — b)

STRÄHNEN + DÜNEN — c)

DÜNEN + BALLEN — d)

REINER SCHUB FLIESSBETTZUSTAND — e)

INDUZIERTE PFROPFENBILDUNG — f)

Fig. 3

Fig. 2

Fig. 4

Fig. 5